Europäisches Patentamt

European Patent Office

Office européen des brevets

(19)

(11) Veröffentlichungsnummer: **0 218 550**
**B1**

(12) **EUROPÄISCHE PATENTSCHRIFT**

(45) Veröffentlichungstag der Patentschrift:
**08.08.90**

(51) Int. Cl.⁵: **B65G 47/31**, B65G 47/24

(21) Anmeldenummer: **86810393.8**

(22) Anmeldetag: **01.09.86**

(54) **Vorrichtung zum Vereinzeln und zum Zuführen von länglichen Nahrungsmittelprodukten zu einer Verpackungsmaschine.**

(30) Priorität: **09.10.85  CH 4354/85**

(43) Veröffentlichungstag der Anmeldung:
**15.04.87 Patentblatt 87/16**

(45) Bekanntmachung des Hinweises auf die Patenterteilung:
**08.08.90 Patentblatt 90/32**

(84) Benannte Vertragsstaaten:
**CH DE FR GB IT LI NL**

(56) Entgegenhaltungen:
**EP-A- 0 062 618**
**EP-A- 0 134 526**
**DE-A- 1 531 948**
**DE-A- 3 344 795**
**GB-A- 2 071 063**
**US-A- 4 645 069**

(73) Patentinhaber: **SIG Schweizerische Industrie-Gesellschaft, CH-8212 Neuhausen am Rheinfall(CH)**

(72) Erfinder: **Lenherr, Harald, Ing. HTL, Schützenstrasse 39 a, CH-8212 Neuhausen am Rheinfall-Schweiz(CH)**

(74) Vertreter: **White, William et al, Isler AG Patentanwalts-Bureau Walchestrasse 23, CH-8006 Zürich(CH)**

ACTORUM AG

## Beschreibung

Leistungsfähigen Verpackungsmaschinen zum Verpacken von Schokoladeriegeln müssen die Schokoladeriegel vereinzelt, d.h. mit einem gegenseitigen Abstand voneinander, parallel zu ihrer Längserstreckung zugeführt werden. Aus der US-PS 3 390 571, der DE-OS 2 339 405, der DE-OS 3 426 673 sowie der EP-A 62 618 sind Vereinzelungsvorrichtungen bekannt, die für diesen Zweck geeignet sind.

Häufig werden die Schokoladeriegel von der Produktionsmaschine quer zu ihrer Längserstreckung angeliefert. In solchen Fällen wird bei den bekannten Fördereinrichtungen die Förderrichtung der Schokoladeriegel geändert (DE-OS 3 426 673 und EP-A 62 618), indem die Riegel von einem Förderband auf ein zweites, rechtwinklig dazu angeordnetes übergeben werden. Um bei dieser Uebergabe Störungen zu vermeiden, werden bei der EP-A 62 618, gegen welche der Anspruch 1 abgegrenzt ist, die Riegel zunächst im einen Drehsinn etwas gedreht, damit sie mit der auf dem letzten Förderband vorn liegenden Stirnseite zuerst auf dieses Förderband gelangen. Bei der Uebergabe an dieses letzte Förderband werden sie dann um denselben Winkel zurückgedreht, so dass sie schliesslich parallel zu ihrer ursprünglichen Lage, aber senkrecht zur ursprünglichen Förderrichtung weiter transportiert werden. Um die erwähnte Drehung zu erreichen, werden die quer zu ihrer Längserstreckung angelieferten Schokoladeriegel von zwei nebeneinander liegenden, gleich rasch laufenden Förderbändern aufgenommen. An die beiden Förderbänder schliessen zwei weitere, nebeneinanderliegende Förderbänder an, die ebenfalls gleich schnell, aber rascher als die ersten Förderbänder laufen. Die beiden Uebergabestellen zwischen den ersten und zweiten Förderbändern sind voneinander beabstandet. Zwischen diesen beiden Uebergabestellen liegen also die Riegel auf der einen Seite noch auf dem langsamer laufenden Band, auf der andern Seite jedoch bereits auf dem rascher laufenden Band auf, so dass sie etwas verdreht werden.

Diese Vorrichtung eignet sich für relativ langsame Verpackungsmaschinen mit einer Kadenz bis etwa 300 pro Minute. Sie ist weniger gut geeignet für unregelmässige Schokoladeriegel, bei welchen gelegentlich zwei benachbarte Riegel durch den Schokoladeüberzug zusammenhängen können. Solche Riegel werden durch die bekannte Vorrichtung nicht zuverlässig vereinzelt.

Aus der GB-A 2 071 063 ist es an sich bekannt, Wellpappestücke auf mehreren nebeneinander und mit Abstand von einander angeordneten Fördergurten schräg nach oben zu transportieren, um sie auf einem stromabwärts angeordneten langsamer laufenden Förderband staffeln zu können. Die Fördergurte werden von einer gemeinsamen Walze mit gleicher Geschwindigkeit angetrieben. Damit die Wellpappestücke auf den geneigten Gurten nicht verrutschen, wird durch Schlitze zwischen den Gurten Luft abgesaugt.

In der DE-A 3 344 795 ist eine Preisauszeichnungsanlage für Lebensmittelpackungen beschrieben. Auf einem Zuführförderband werden die Packungen unterschiedlicher Grösse willkürlich orientiert angeliefert. Stromabwärts des Zuführbandes schleisst ein aus drei nebeneinander angeordneten, gemeinsam angetriebenen Riemen bestehendes Vereinzelungsband an, das rascher läuft als das Zuführband. Die Oberfläche des Vereinzelungsbandes liegt tiefer als die Oberfläche des Zuführbandes. Zwischen dem Zuführband und dem Vereinzelungsband ist ein quer zur Transportrichtung dieser Bänder laufendes, schmales Riemchen angeordnet. Das Riemchen überragt die Oberfläche des Vereinzelungsbandes, liegt aber tiefer als das Zuführband. Im Bereich des Riemchens ist auf der in Transportrichtung des Riemchens vorderen Seite eine parall zur Transportrichtung der Förderbänder verlaufende Anschlagkante oberhalb dieser Bänder angeordnet. Auf der gegenüber liegenden Seite verläuft oberhalb der Förderbänder eine Leitschiene schräg zur Transportrichtung. Beim Uebergang einer Packung vom Zuführband zum Vereinzelungsband wird zunächst ihr Vorderteil und anschliessend ihr Hinterteil durch das Querförderriemchen gegen die Anschlagkante geschoben. Dadurch werden die Packungen ausgerichtet. Die Leitschiene dient dazu, die Packungen parallel zu sich selber quer zu verschieben. Diese Art der Ausrichtung von Lebensmittelpackungen eignet sich nur für langsam laufende Förderbänder und für Packungen, die keiner schonender Handhabung bedürfen, weil das quertransportierende Riemchen an der Unterseite der Packungen erheblich reibt.

Die Aufgabe der vorliegenden Erfindung besteht darin, eine Vorrichtung gemäss Oberbegriff des Anspruchs 1 derart weiter zu bilden, dass die Produkte zuverlässig vereinzelt werden, und dass sie mit hoher Fördergeschwindigkeit bei schonender Handhabung der Produkte betrieben werden kann. Diese Aufgabe wird durch die kennzeichnenden Merkmale des Anspruchs 1 gelöst.

Durch die Saugluftöffnungen bei den Uebergabestellen wird eine höhere Adhäsion der Produkte auf den Fördergurten erreicht. Wenn zwei benachbarte Produkte noch aneinander haften, reicht dann die Kraft zum Losbrechen voneinander, so dass die Produkte zuverlässig vereinzelt werden. Ausserdem ist der Drehwinkel, um welchen sie bei der Uebergabe gedreht werden, erheblich konstanter als bei der oben erwähnten bekannten Vereinzelungsvorrichtung. Damit wird das Weiterdrehen in der nachfolgenden Drehstufe erheblich vereinfacht. Weil diese nachfolgende Drehung bei gleichbleibender Förderrichtung erfolgt, also keine Umlenkung der Förderrichtung um 90° erforderlich ist, sind bei schonender Handhabung der Produkte wesentlich höhere Geschwindigkeiten als bei der bekannten Vorrichtung möglich. In einer Versuchsausführung wurden bereits Kadenzen von 1000 Stück pro Minute erreicht, was auch für die schnellsten bekannten Hochleistungsverpackungsmaschinen ausreicht.

Nachfolgend wird ein Ausführungsbeispiel der Erfindung anhand der Zeichnung erläutert. Darin zeigt:

Fig. 1 bis 3 schematische Ansichten von oben auf die Vorrichtung bei unterschiedlichen Einstellungen des Abstandes der Uebergabestellen,

Fig. 4 eine schematische Seitenansicht der Vorrichtung,

Fig. 5 die Uebergabestellen im Grundriss in vergrösserter Darstellung, und

Fig. 6 einen Schnitt längs der Linie VI - VI in Fig. 5.

Von einer Produktionsmaschine werden der dargestellten Vorrichtung längliche Schokoladeriegel 1 auf einem Förderband 2 zwischen zwei seitlichen Führungsschienen 3 mit ihrer Längserstreckung quer zur Förderrichtung V angeliefert. Die Riegel 1 gelangen zunächst auf zwei nebeneinander angeordnete Förderbänder 4, 6, die mit gleicher Geschwindigkeit angetrieben sind. Dabei liegen die Riegel 1 mit der einen Seite auf dem Band 4, mit der andern auf dem Band 6 auf. Der Spalt 12 zwischen den Bändern 4, 6 ist etwa in der Mitte der Riegel 1.

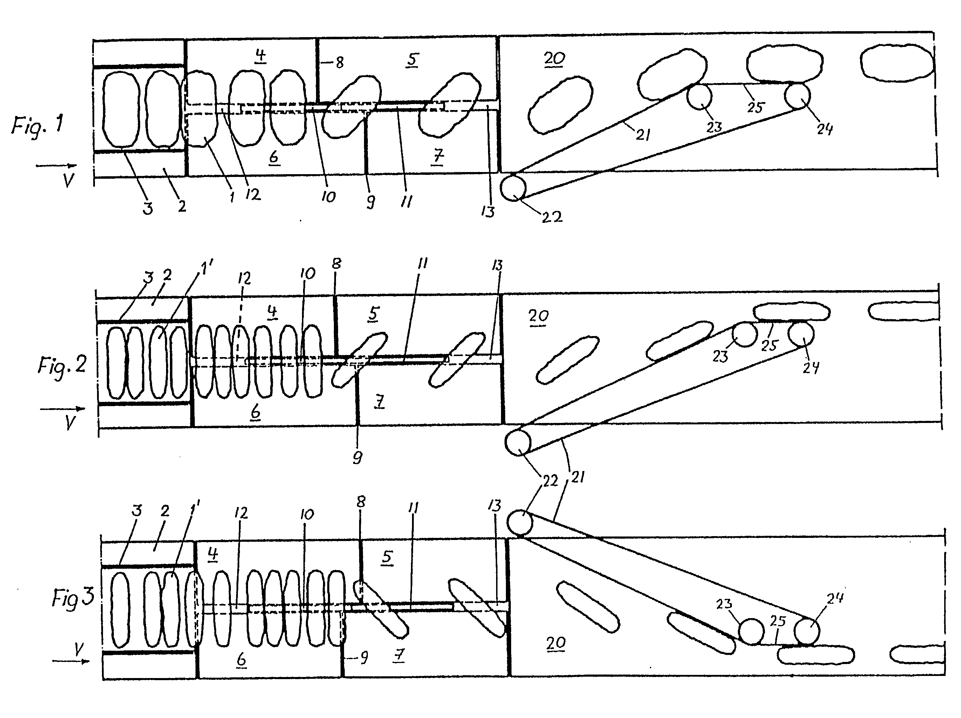

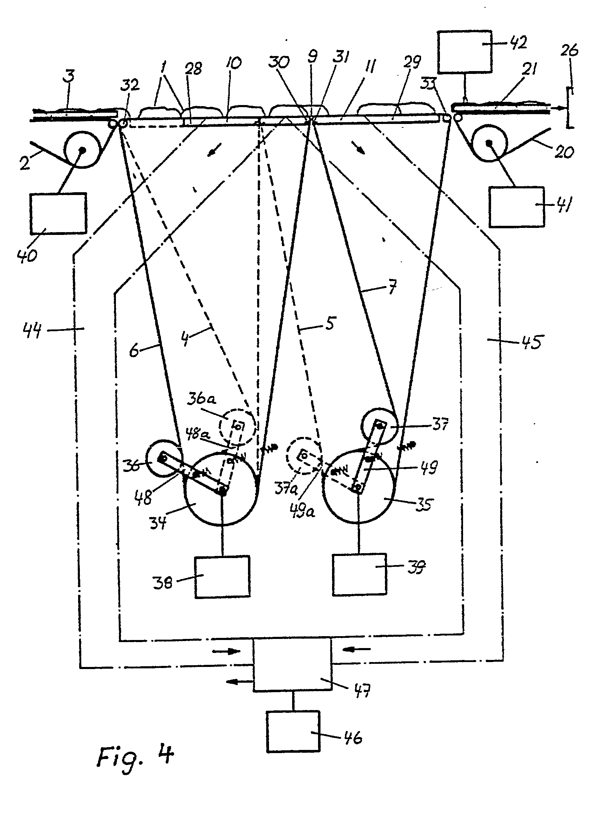

Von den Bändern 4, 6 werden die Riegel 1 über je eine Uebergabestelle 8, 9 an zwei anschliessende Bänder 5, 7 mit gleicher Förderrichtung übergeben, die mit einer zweiten, höheren Geschwindigkeit als die Bänder 4, 6 laufen. Bei der Darstellung nach Fig. 1 und 2 liegt die Uebergabestelle 8 zwischen dem Band 4 und dem Band 5 stromaufwärts der Uebergabestelle 9 zwischen Band 6 und Band 7. Zwischen den beiden Uebergabestellen 8, 9 liegt also der Riegel 1 auf der einen Seite auf dem langsamer laufenden Band 6, auf der andern Seite auf dem rascher laufenden Band 5 auf und wird deshalb im Uhrzeigersinn gedreht.

Im Spalt 12, 13 zwischen den Förderbändern 4, 6 bzw. 5,7 ist eine Saugluftöffnung 10, 11 angeordnet, durch welche Luft von einem Gebläse angesaugt wird. Dadurch werden die Riegel 1 auf die Bänder 4 bis 7 heruntergesaugt. Die Adhäsion zwischen Riegel 1 und Bändern 4 bis 7 ist daher hoch, so dass die Riegel 1 zuverlässig vereinzelt und um einen annähernd konstanten Winkel gedreht werden. Der stromabwärtige Teil 11 der Sauglüftöffnung erstreckt sich über die Uebergabestelle 9 hinaus. Dies hat den Vorteil, dass die zwischen den Uebergabestellen 8, 9 auf die Riegel 1 übertragene Drehbewegung bei der Uebergabe der Riegel auf das Band 7 rasch gestoppt wird. Der stromaufwärtige Teil 10 der Sauglüftöffnung erstreckt sich ebenfalls über die stromaufwärtige Uebergabestelle 8 hinaus. Damit wird der unmittelbar stromaufwärts der Uebergabestelle 8 gelegene Riegel 1 auf den langsamer laufenden Bändern 4, 6 festgehalten, während der unmittelbar stromabwärts der Uebergabestelle 8 liegende Riegel durch das rascher laufende Band 5 weggedreht wird. Dies erhöht die Zuverlässigkeit der Vereinzelung bei aneinander haftenden Riegeln 1.

Die Förderbänder 5, 7 übergeben die gedrehten Riegel 1 einem in gleicher Förderrichtung V fördernden Ausrichtförderband 20, welches mindestens mit der Geschwindigkeit der Bänder 5, 7 läuft. Die Riegel werden auf dem Ausrichtförderband 20 durch ein schräg zur Förderrichtung V angeordnetes Führungsband 21 seitlich verschoben. Dabei wird ihre Längserstreckung parallel zur Förderrichtung V ausgerichtet. Das Führungsband 21 läuft etwa mit derselben Geschwindigkeit wie das Ausrichtförderband 20. Es hat an seinem stromabwärtigen Ende einen parallel zur Förderrichtung V verlaufenden Abschnitt 25 und ist um drei Umlenkrollen 22, 23, 24 geführt, von denen eine angetrieben ist. Vom Ausrichtförderband 20 werden die Produkte 1 einer in Fig. 4 angedeuteten Verpackungsmaschine 26 zugeführt.

Durch den spitzen Winkel zwischen Führungsband 21 und Förderrichtung V ist die Auftreffgeschwindigkeit der Riegel 1 auf das Förderband 21 sehr gering, so dass die Riegel 1 sehr schonend behandelt werden.

In Fig. 4 ist dargestellt, wie die Förderbänder 4 bis 7 angetrieben werden. Sie laufen über flache Stützplatten 28, 29, die an den Uebergabestellen 8, 9 je eine Umlenkkante 30,31 aufweisen. Dadurch sind die Produkte an der Stelle, wo die Drehung eingeleitet und abgebremst wird, optimal unterstützt, so dass Betriebsstörungen weitgehend ausgeschlossen sind. Am gegenüberliegenden Ende der Förderstrecke laufen die Bänder 4 bis 7 über je eine Umlenkrolle 32, 33. Die Bänder werden durch je eine Antriebsrolle 34, 35 angetrieben und durch Spannrollen 36, 37 gespannt. Die Antriebsrollen 34, 35 sind durch drehzahlgeregelte Motoren 38, 39 angetrieben.

Die vier Bänder 4 bis 7 sind gleich lang, so dass die Lagerhaltung vereinfacht wird. Daher sind die Schwenkarme 48a, 49 der den Bändern 4, 7 (Fig. 1 und 2) mit kurzer Förderstrecke zugeordneten Spannrollen 36a, 37 mehr ausgelenkt als die den Bändern 5, 6 zugeordneten Schwenkarme 48, 49a.

In Fig. 4 sind auch die Antriebsmotoren 40, 41, 42 der Förderbänder 2, 20 und des Führungsbandes 21 angedeutet. Von den beiden Abschnitten 10, 11 der Sauglüftöffnung führen zwei Kanäle 44, 45 zu einem von einem Motor 46 angetriebenen Sauggebläse 47.

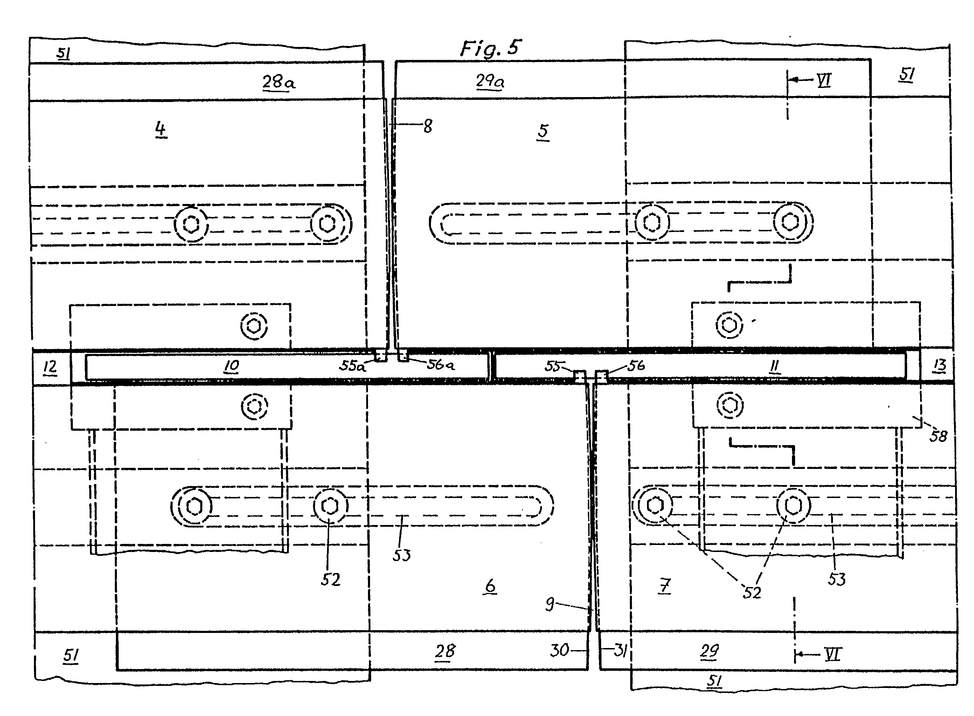

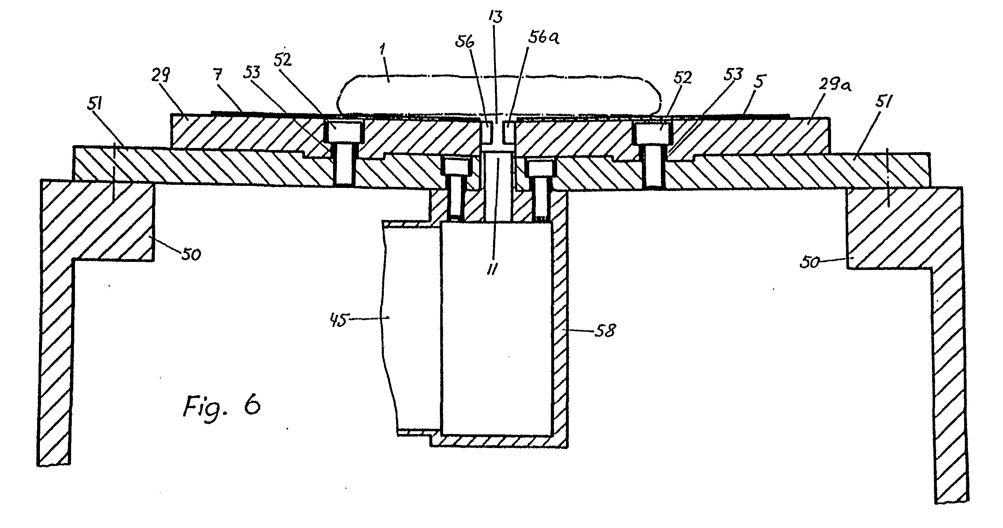

In den Fig. 5 und 6 ist der Bereich der beiden Uebergabestellen und ein Querschnitt vergrössert dargestellt. Die Stützplatten 28, 29, 28a, 29a für die Bänder 4 bis 7 sind auf mit einem Rahmen 50 starr verbundenen Platten 51 mittels Schrauben 52 befestigt. Die Schrauben 52 sind durch Längsschlitze 53 in den Stützplatten 28, 29 gesteckt, so dass die Lage der Stützplatten 28, 29 in Förderrichtung einstellbar ist. Damit kann der in Förderrichtung gemessene gegenseitige Abstand der Uebergabestellen 8, 9 eingestellt werden. Dies ist nützlich, um den durch die Bänder 4 bis 7 den Riegeln 1 vermittelten Drehwinkel der Form der Riegel 1 anzupassen. Beispielsweise ist für relativ kurze und breite Riegel 1 (Fig. 1) ein grösserer Abstand der Uebergabestellen 8, 9 zweckmässig als für schmale, lange Riegel 1' (Fig. 2 und 3).

Die Umlenkkanten 30, 31 der Stützplatten 28, 29 sind leicht bombiert, um ein seitliches Auswandern der Bänder 4 bis 7 zu verhindern. Die Stützplatten 28, 29, 28a, 29a haben in Verlängerung der Umlenkkanten 30, 31 seitliche Nasen 55, 56 55a, 56a, damit die Bänder 4 bis 7 auch dann nicht über eine scharfe Kante laufen, wenn sie seitlich leicht auswan-

dern. Der Absaugkanal 45 mündet in einem mit den Platten 51 verschraubten Gehäuse 58, das nach oben die Saugluftöffnung 11 im Spalt 13 aufweist.

Durch die einstellbare Länge der Förderstrecken der Bänder 4 bis 7 ist es ohne weiteres möglich, die Vorrichtung überwachungsfreundlich den Betriebsbedingungen anzupassen. Zum Beispiel wird für eine Ueberwachung von der in Förderrichtung linken Seite her die Uebergabestelle 9 stromabwärts der Uebergabestelle 8 angeordnet (Fig. 1 und 2), wobei das stromaufwärtige Ende des Ausrichtförderbandes 21 in Förderrichtung gesehen rechts liegt. Für die Ueberwachung von der rechten Seite wird hingegen die Uebergabestelle 9 stromaufwärts der Uebergabestelle 8 angeordnet (Fig 3) und dementsprechend die Umlenkrolle 22 links.

Wie aus Fig. 6 ersichtlich ist, sind die Förderbänder 5, 7 und entsprechend auch die Bänder 4, 6 leicht V-förmig zueinander angeordnet. Die Riegel 1 liegen also bloss mit ihren Endbereichen auf den Bändern 4 bis 7 auf. Dies hat den Vorteil, dass die durch die Vorrichtung den Riegeln 1 vermittelten Drehwinkel sehr gleichmässig sind, selbst wenn die Riegel 1 nicht eine vollkommen ebene Unterseite haben. Ausserdem werden durch diese Ausbildung die zum Losbrechen aneinander hängender, benachbarter Riegel erforderlichen Kräfte mit hoher Zuverlässigkeit erreicht. Die Achsen der Antriebsrollen 34, 35 für die nebeneinanderliegenden Förderbänder 4, 6 bzw. 5, 7 sind entsprechend dem Neigungswinkel der Förderstrecken der Bänder 4 bis 7 leicht gegeneinander geneigt und beispielsweise über je ein Kardangelenk miteinander verbunden.

**Patentansprüche**

1. Vorrichtung zum Vereinzeln von quer zu ihrer Längserstreckung angelieferten, länglichen Nahrungsmittelprodukten (1) mit einer flachen Unterseite, insbesondere Schokoladeriegel, und zum Zuführen der Produkte (1) parallel zu ihrer Längserstreckung zu einer Verpackungsmaschine (26), umfassend einen ersten (4) und zweiten (6) umlaufenden Fördergurt, die nebeneinanderliegend mit einer gleichen, ersten Fördergeschwindigkeit angetrieben sind, je einen an den ersten und zweiten Fördergurt (4, 6) anschliessenden dritten (5) und vierten (7) Fördergurt, die ebenfalls nebeneinanderliegend mit einer gleichen, zweiten, grösseren Geschwindigkeit angetrieben sind, wobei die beiden Uebergabestellen (8, 9) zwischen den aneinander anschliessenden Fördergurten (4, 5 bzw. 6, 7) in Förderrichtung (V) gesehen gegeneinander versetzt sind, dadurch gekennzeichnet, dass mindestens zwischen den beiden Uebergabestellen (8, 9) eine Saugluftöffnung (10, 11) im Spalt (12, 13) zwischen den nebeneinanderliegenden Fördergurten (4-7) angeordnet ist, und dass stromabwärts des dritten und vierten Fördergurtes (20) ein Ausrichtförderband (20) mit gleicher Förderrichtung (V) angeordnet ist, über welchem eine zur Transportrichtung (V) schräg gestellte Führungseinrichtung (21-25) angeordnet ist, welche einen angetriebenen endlosen Riemen (21) umfasst, der die Produkte (1) bei gleichbleibender Förderrichtung (V) in eine Lage dreht, in welcher ihre Längserstreckung annähernd parallel zur Förderrichtung (V) ist.

2. Vorrichtung nach Anspruch 1, dadurch gekennzeichnet, dass die Fördergurte (4, 7) derart ausgebildet sind, dass die Produkte beidseitig nur mit ihrem Endbereich auf den Fördergurten (4-7) aufliegen.

3. Vorrichtung nach Anspruch 2, dadurch gekennzeichnet, dass die Fördergurte (4-7) V-förmig angeordnet sind.

4. Vorrichtung nach einem der Ansprüche 1 bis 3, dadurch gekennzeichnet, dass die Fördergurte (4-7) als Förderbänder ausgebildet und an den Uebergabestellen (8, 9) um Umlenkkanten (30, 31) umgelenkt sind.

5. Vorrichtung nach einem der Ansprüche 1 bis 4, dadurch gekennzeichnet, dass der in Förderrichtung gemessene Abstand zwischen den beiden Uebergabestellen (8, 9) einstellbar ist.

6. Vorrichtung nach einem der Ansprüche 1 bis 5, dadurch gekennzeichnet, dass sich die Saugöffnung (10, 11) zwischen den nebeneinanderliegenden Fördergurten (4-7) mindestens einseitig über die Uebergabestelle (8, 9) hinaus erstreckt.

7. Vorrichtung nach einem der Ansprüche 1 bis 6, dadurch gekennzeichnet, dass die Führungseinrichtung (21-25) am stromabwärtigen Ende einen zur Förderrichtung (V) parallelen Abschnitt (25) aufweist.

8. Vorrichtung nach einem der Ansprüche 1 bis 7, dadurch gekennzeichnet, dass das stromaufwärtige Ende (22) der Führungseinrichtung (21-25) auf der Seite der stromabwärtigen Uebergabestelle (9) angeordnet ist.

**Claims**

1. A device for separating elongate food products (1), which are delivered transversely to their longitudinal extent and which have a flat underside, in particular chocolate bars, and for feeding the products (1) parallel to their longitudinal extent to a packaging machine (26), comprising first (4) and second (6) endless conveyor belts, which lie adjacent to one another and are driven at the same, first, conveyor speed, third (5) and forth (7) conveyor belts, which are connected to the first and second conveyor belts (4, 6) respectively and which also lie adjacent to one another and are driven at the same, second, higher speed, wherein the two transfer points (8, 9) between the connected conveyor belts (4, 5 and 6, 7) are offset with respect to one another as viewed in the direction of transportation (V), characterised in that an intake air opening (10, 11) is disposed at least between the two transfer points (8, 9), in a gap (12, 13) between the adjacent conveyor belts (4, 7), and that, downstream of the third and fourth conveyor belts (5, 7) an alignment conveyor belt (20) is disposed which has the same direction of transportation (V) and above which a guide device (21–25) is disposed which is inclined with respect to the direction of transportation (V) and which has a driven continuous belt (21), which, given the same direction of transportation (V), rotates the products (1) into a posi-

tion in which their longitudinal extent is substantially parallel to the direction of transportation (V).

2. A device as claimed in claim 1, characterised in that the conveyor belts (4, 7) are formed in such a way that only the region at each end of the products lies on the conveyor belts (4–7).

3. A device as claimed in claim 2, characterised in that the conveyor belts (4–7) are disposed in a V-shape.

4. A device as claimed in any of claims 1 to 3, characterised in that the conveyor belts (4–7) are in the form of conveyor bands and are deflected at the transfer points (8, 9) about deflection edges (30, 31).

5. A device as claimed in any of claims 1 to 4, characterised in that the distance between the two transfer points (8, 9), which is measured in the direction of transportation, is adjustable.

6. A device as claimed in any of claims 1 to 5, characterised in that the intake opening (10, 11) extends between the adjacent conveyor belts (4–7) beyond the transfer point (8, 9) at least on one side.

7. A device as claimed in any of claims 1 to 6, characterised in that the downstream end of the guide device (21–25) has a portion (25) which is parallel to the direction of transportation (V).

8. A device as claimed in any of claims 1 to 7, characterised in that the upstream end (22) of the guide device (21–25) is disposed on the side of the downstream transfer point (9).

**Revendications**

1. Dispositif pour séparer des produits alimentaires oblongs (1) ayant une face inférieure plate, en particulier des bâtons de chocolat, délivrés perpendiculairement à leur longueur, et pour acheminer ces produits (1) parallèlement à leur longueur vers une machine d'emballage (26), comprenant une première (4) et une deuxième (6) courroie transporteuse sans fin, qui sont entraînées côte à côte à une même première vitesse de transport, une troisième (5) et une quatrième (7) courroie transporteuse, qui font respectivement suite à la première et à la deuxième courroie transporteuse (4, 6) et qui sont également entraînées côte à côte à une même seconde vitesse, plus élevée que la première, les deux zones de transfert (8, 9) entre les courroies transporteuses qui se font respectivement suite (4, 5 et 6, 7) étant décalées l'une par rapport à l'autre dans la direction (V) du transport, caractérisé en ce qu'au moins entre les deux zones de transfert (8, 9), un orifice d'aspiration d'air (10, 11) est disposé dans la fente (12, 13) entre les courroies transporteuses (4–7) disposées côté à côte, et en ce qu'il est disposé, en aval des troisième et quatrième courroies transporteuses (5, 7), une bande transporteuse d'orientation (20) ayant la même direction de transport (V), au-dessus de laquelle est disposé, en position oblique par rapport à la direction de transport (V), un dispositif de guidage (21–25) comprenant une courroie sans fin entraînée (21) qui fait tourner les produits (1), tandis que la direction de transport (V) est maintenue, dans une position dans laquelle leur longueur est approximativement parallèle à la direction de transport (V).

2. Dispositif selon la revendication 1, caractérisé en ce que les courroies transporteuses (4–7) sont réalisées de telle sorte que les produits ne reposent sur les courroies transporteuses (4–7) des deux côtés seulement par leur région d'extrémité.

3. Dispositif selon la revendication 2, caractérisé en ce que les courroies transporteuses (4–7) sont disposées en forme de V.

4. Dispositif selon l'une quelconque des revendications 1 à 3, caractérisé en ce que les courroies transporteuses (4–7) sont réalisées sous forme de bandes transporteuses et sont renvoyées autour d'arêtes de renvoi (30, 31) au niveau des zones de transfert (8, 9).

5. Dispositif selon l'une quelconque des revendications 1 à 4, caractérisé en ce que la distance entre les deux zones de transfert (8, 9), mesurée dans la direction de transport, est réglable.

6. Dispositif selon l'une quelconque des revendications 1 à 5, caractérisé en ce que l'orifice d'aspiration (10, 11) s'étend au-delà de la zone de transfert (8, 9), au moins d'un côté, entre les courroies transporteuses (4–7) disposées côte à côte.

7. Dispositif selon l'une quelconque des revendications 1 à 6, caractérisé en ce que le dispositif de guidage (21–25) présente, à son extrémité aval, une section (25) parallèle à la direction de transport (V).

8. Dispositif selon l'une quelconque des revendications 1 à 7, caractérisé en ce que l'extrémité amont (22) du dispositif de guidage (21–25) est disposée du côté de la zone de transfert située en aval (9).

Fig. 1

Fig. 2

Fig 3

Fig. 4

*Fig. 5*

Fig. 6